# EUROPEAN PATENT APPLICATION

(11) **EP 3 142 107 A1**
(43) Date of publication of application: **15.03.2017**
(21) Application number: 16182505.4
(22) Date of filing: 03.08.2016
(51) Int. Cl.: G10L 15/18, H04N 21/422, G10L 15/30

(54) **VOICE RECOGNITION APPARATUS AND CONTROLLING METHOD THEREOF**

(30) Priority: 14.09.2015 KR 20150129939
(71) Applicant: Samsung Electronics Co., Ltd., Suwon-si, Gyeonggi-do 16677 (KR)
(72) Inventor: PARK, Kyung-mi, Gyeonggi-do (KR); KWON, Nam-yeong, Gyeonggi-do (KR); SHIN, Sung-hwan, Gyeonggi-do (KR)
(74) Representative: Appleyard Lees IP LLP

(57) **Abstract**

A voice recognition apparatus is provided. The voice recognition apparatus includes a communicator configured to communicate with an external voice recognition server; a memory configured to store a plurality of keywords and domain information corresponding to each of the plurality of keywords; a microphone configured to generate a voice signal corresponding to an uttered voice; and a controller configured to recognize a keyword included in the voice signal, determine a domain corresponding to the recognized keyword by using the domain information, and control the communicator to transmit information regarding the determined domain and the voice signal to the external voice recognition server.

## Description

### CROSS-REFERENCE TO RELATED APPLICATION

This application claims priority from Korean Patent Application No. 10-2015-0129939, filed in the Korean Intellectual Property Office on September 14, 2015, the disclosures of which is incorporated herein by references in its entirety.

### BACKGROUND

### 1. Field

Apparatuses and methods consistent with exemplary embodiments relate to a voice recognition apparatus and a control method thereof, and more particularly, to a voice recognition apparatus for performing voice recognition in consideration of a domain corresponding to a user's uttered voice and a control method thereof.

### 2. Description of the Related Art

With the development of electronic technologies, various types of electronic products, such as a television, a mobile phone, a personal computer, a notebook PC, a Personal Digital Assistant (PDA), and etc. have been developed and used in homes.

Recently, to control an electronic apparatus more conveniently and intuitionally, technologies using voice recognition have been developed. However, as services and menus for providing the electronic apparatus have been diversified, a range of vocabulary for the voice recognition has also been extended gradually.

In particular, since the voice recognition is a process of finding out a text having a pattern closest to a user's uttered pattern, having a wide range of vocabulary including a large number of similar vocabulary in case of performing a large amount of voice recognition, there has been a problem that results of the voice recognition are different depending on the surrounding environment, a user, and so on.

Furthermore, if a user voice is transmitted to an external server to perform a large amount of voice recognition, there has also been a problem that a routine conversation may be leaked outside of an apparatus against a user's intention.

### SUMMARY

Exemplary embodiments address at least the above problems and/or disadvantages and other disadvantages not described above. Also, the exemplary embodiments are not required to overcome the disadvantages described above, and may not overcome any of the problems described above.

Exemplary embodiments are related to a voice recognition apparatus for performing voice recognition in consideration of a domain including a user's uttered voice, and a control method thereof.

According to an aspect of an exemplary embodiment, there is provided a voice recognition apparatus including a communicator configured to communicate with an external voice recognition server; a memory configured to store a plurality of keywords and domain information corresponding to each of the plurality of keywords; a microphone configured to generate a voice signal corresponding to an uttered voice; and a controller configured to recognize a keyword included in the voice signal, determine a domain corresponding to the recognized keyword by using the domain information, and control the communicator to transmit information regarding the determined domain and the voice signal to the external voice recognition server.

According to an aspect of an exemplary embodiment, there is provided a control method of a voice recognition apparatus for storing a plurality of keywords and domain information corresponding to each of the plurality of keywords, the method including generating a voice signal corresponding to an uttered voice; recognizing a keyword included in the voice signal; and determining a domain corresponding to the recognized keyword by using the domain information and transmitting information regarding the determined domain and the voice signal to an external voice recognition server.

According to an aspect of an exemplary embodiment, there is provided a non-transitory recording medium for storing a program for a control method of a voice recognition apparatus storing a plurality of keywords and domain information corresponding to each of the plurality of keywords which may include generating a voice signal corresponding to an uttered voice; recognizing a keyword included in the voice signal; and determining a domain corresponding to the recognized keyword by using the domain information, and transmitting information regarding the determined domain and the voice signal to an external voice recognition server.

### BRIEF DESCRIPTION OF THE DRAWINGS

The above and/or other aspects will be more apparent by describing in detail exemplary embodiments with reference to the accompanying drawings, in which:
FIG. 1 is a view illustrating a voice recognition system according to an exemplary embodiment;
FIG. 2 is a block diagram illustrating a voice recognition apparatus according to an exemplary embodiment;
FIG. 3 is a view illustrating information stored in a voice recognition apparatus according to an exemplary embodiment;
FIGS. 4 to 5 are views illustrating a method of processing a voice signal according to an exemplary embodiment;
FIGS. 6 to 7 are views illustrating a screen for inducing an utterance provided by a voice recognition apparatus according to various exemplary embodiments;
FIGS. 8A to 8D are views illustrating a user interface screen provided by a voice recognition apparatus according to various exemplary embodiments;
FIG. 9 is a block diagram illustrating a voice recognition apparatus according to an exemplary embodiment; and
FIG. 10 is a flowchart illustrating a voice recognition apparatus according to an exemplary embodiment.

### DETAILED DESCRIPTION OF EXEMPLARY EMBODIMENTS

As exemplary embodiments may be variously modified and have several forms, specific exemplary embodiments will be illustrated in the accompanying drawings and be described in detail in the written description. However, it is to be understood that this is not intended to limit the exemplary embodiments, but includes all modifications, equivalents, and substitutions without departing from the scope and spirit of the exemplary embodiments. Also, well-known functions or constructions are not described in detail since they would obscure the disclosure with unnecessary detail.

Terms 'first', 'second', and the like, may be used to describe various components, but the components are not limited by the terms. The terms are used to distinguish one component from another component.

Terms used in the present specification are used only in order to describe specific exemplary embodiments rather than limiting the scope of the present disclosure. Singular forms are intended to include plural forms unless the context clearly indicates otherwise. It will be further understood that the terms "comprises" or "configured of" used in this specification, specify the presence of features, numerals, steps, operations, components, parts written in this specification, or a combination thereof, but do not preclude the presence or addition of one or more other features, numerals, steps, operations, components, parts, or a combination thereof.

In the exemplary embodiment, a 'module' or a 'unit' performs at least one function or operation, and may be implemented with hardware or software or a combination of the hardware and the software. Further, a plurality of 'modules' or a plurality of 'units' are integrated into at least one module except for the 'module' or 'unit' which needs to be implemented with specific hardware and thus may be implemented with at least one processor (not shown).

Hereinafter, exemplary embodiments will be described in detail with reference to the accompanying drawings. Like reference numerals in the drawings denote like elements, and redundant descriptions are omitted.

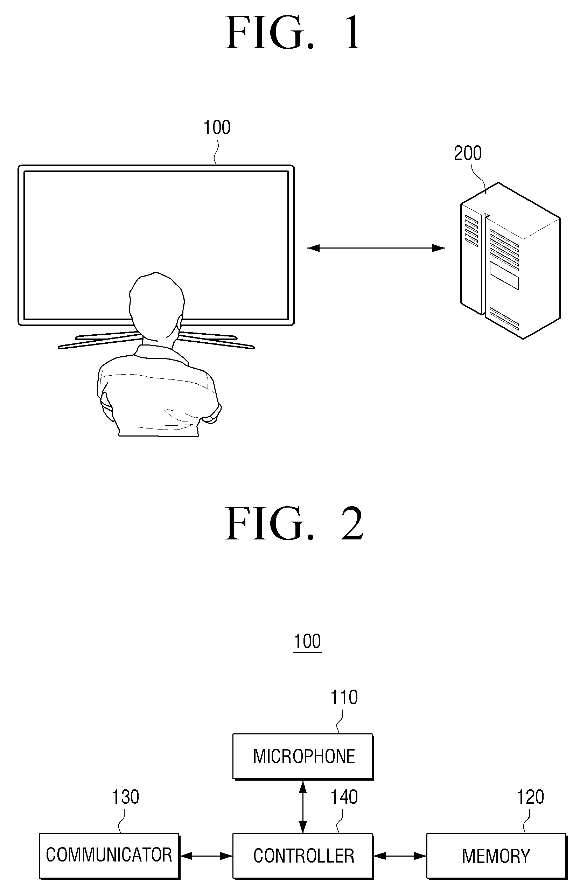

FIG. 1 is a view illustrating a voice recognition system according to an exemplary embodiment.

Referring to FIG. 1, the voice recognition system may include a voice recognition apparatus 100 and a voice recognition server 200. The voice recognition apparatus 100 may be a television as shown in FIG. 1. However, this is only an example, and the voice recognition apparatus 100 may be implemented with various electronic apparatuses such as a smart phone, a desktop PC, a notebook, a navigation, an audio, a smart refrigerator, an air conditioner, and etc.

The voice recognition apparatus 100 may transmit a voice signal corresponding to an input uttered voice of a user to the voice recognition server 200, and receive a result of voice recognition regarding the voice signal from the voice recognition server 200.

The voice recognition apparatus 100 may recognize a pre-stored keyword from the user's uttered voice. Herein, the keyword may be a trigger for executing a voice recognition mode. Furthermore, the voice recognition apparatus 100 may provide the voice recognition server 200 with a user's uttered voice starting with the recognized keyword. The voice recognition apparatus 100 may determine a domain which corresponds to the keyword recognized from the voice signal, and provide the voice recognition server 200 with information regarding the determined domain along with the voice signal. Therefore, based on the information regarding the domain provided by the voice recognition apparatus 100, the voice recognition server 200 recognizes the voice signal by using an acoustic model and a language model of the domain.

In addition, the voice recognition apparatus 100 does not provide the voice recognition server 200 with a voice signal if a pre-designated keyword is not recognized from the voice signal. Therefore, this may prevent a user conversation not including a keyword for initiating voice recognition from being leaked outside of the apparatus.

The voice recognition server 200 may perform voice recognition regarding the user's uttered voice received from the voice recognition apparatus 100.

In particular, the voice recognition server 200 may classify a plurality of domains according to a topic such as a drama, a movie, a weather, and etc., and use a domain-based voice recognition technique for recognizing the voice signal by using an acoustic model and a language model specialized in each domain.

For example, the voice recognition server 200 extracts the feature of a voice from the voice signal. In the process of extracting features, unnecessarily duplicated voice information is eliminated, and information which may improve consistency between the same voice signals, further distinguishing from other voice signals, is extracted from the voice signal. There are techniques which may be used for extracting a feature vector, such as Linear Predictive Coefficient, Cepstrum, Mel Frequency Cepstral Coefficient (MFCC), Filter Bank Energy, and etc.

The voice recognition server 200 performs a similarity calculation and a recognition process for the feature vector extracted from the process of extracting features. For example, VQ (Vector Quantization) technique, HMM (using statistical pattern recognition) technique, DTW (using a template-based pattern matching method) technique, and etc. may be used. To perform a similarity calculation and recognition, it may be used an acoustic model for modeling the feature regarding a signal of a voice to compare the features with each other and a language model for modeling a sequence relation between languages such as words, syllables, and etc. associated with a recognition vocabulary. In particular, the voice recognition server 200 includes a plurality of acoustic models and language models, and these models are specialized according to a domain. For example, in case of a drama domain, a recognition process is performed by using a language model and an acoustic model specialized in recognizing drama titles, actor names, and etc.

The voice recognition server 200 may transmit a result of voice recognition to the voice recognition apparatus 100, and the voice recognition apparatus 100 may perform an operation corresponding to the received result of voice recognition. For example, the voice recognition apparatus 100 may output a message "the name of program you requested is ○○○" in reply to a voice questioning "what is the name of program currently being broadcasted?" through a voice, a text, or a combination thereof.

Hereinafter, it will be described in detail regarding the voice recognition apparatus 100 with reference to FIG. 2.

FIG. 2 is a block diagram illustrating a configuration of the voice recognition apparatus according to an exemplary embodiment.

Referring to FIG. 2, the voice recognition apparatus 100 may include a microphone 110, a memory 120, a communicator 130 (e.g., communication interface or communication device), and a controller 140. The voice recognition apparatus 100 may include an apparatus capable of recognizing a user's uttered voice and performing an operation corresponding to the user's uttered voice, for example, the voice recognition apparatus 100 may be implemented by an electronic apparatus in various forms such as a TV, an electronic bulletin boards, a large format display (LFD), a smart phone, a tablet, a desktop PC, a notebook, a home network system server, and etc.

A microphone 110 is configured to receive an input of a user's uttered voice and generate a corresponding voice signal. The microphone 110 may be mounted on the voice recognition apparatus 100, but it may also be positioned outside of the apparatus, or may be implemented as a detachable form.

A memory 120 may store at least one keywords and domain information corresponding to each of the at least one keywords

For example, the memory 120 may be a recording medium for storing each program necessary for operating the voice recognition apparatus 100, which may be implemented as a hard disk drive (HDD), and etc. For example, the memory 120 may be provided with a ROM for storing a program for performing an operation of the controller 140 and a RAM for temporally storing data generated by performing an operation of the controller. The memory 120 may be further provided with an electrically erasable and programmable ROM (EEROM) for storing each type of reference data and etc.

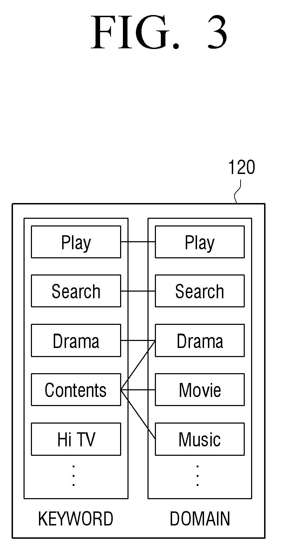

In particular, the memory 120 may store domain information corresponding to at least one of keywords and each of the keyword, and herein, the keyword may be a trigger keyword for initiating voice recognition. In response to a trigger keyword being recognized, the voice recognition apparatus 100 is operated in a voice recognition mode, and performs a voice recognition process for subsequent input voice signals. Here, the domain information means information indicating a correspondence relation between each keyword and domain. An example of the domain information corresponding to a keyword stored in the memory 120 and a keyword is illustrated in FIG. 3.

Referring to FIG. 3, the memory 120 stores keywords such as "Play", "Search", "Drama", "Content", "Hi TV", and etc. These keywords may be keywords that are designated directly by the user. The voice recognition apparatus 100 is operated in a voice recognition mode in response to these keywords being recognized. Furthermore, the memory 120 stores domain information corresponding to each keyword. The memory 120 stores information indicating that a domain corresponding to the keyword "Play" is "Play" domain, a domain corresponding to the keyword "Drama" is "Drama" domain, a domain corresponding to the keyword "Contents" is "Drama" domain, "Movie" domain, and "Music" domain, and that there is no domain corresponding to the keyword "Hi TV".

The memory 120 may store a control command matching with an intention of a user utterance. For example, the memory 120 may store a control command for changing a channel of a display apparatus which corresponds to the intention of the user utterance to change a channel, and the memory 120 may store a control command for executing a function of reservation recording regarding a specific program in a display apparatus which corresponds to the user utterance to reserve recording.

The memory 120 may store a control command for controlling the temperature of an air conditioner which corresponds to the intention of the user utterance to control the temperature, and may store a control command for playing an acoustic output apparatus which corresponds to the intention of the user utterance to play the music. As described above, the memory 120 may store a control command for controlling various external apparatuses according to an intention of user utterance.

A communicator 130 is configured to perform communication with an external apparatus. In particular, the communicator 130 may perform communication with an external voice recognition server 200.

The communicator 130 may perform communication by using not only a method of communicating with an external apparatus through a local area network (LAN) and an internet network, but also wireless communication methods (such as Z-wave, 4LoWPAN, RFID, LTE D2D, BLE, GPRS, Weightless, Edge Zigbee, ANT+, NFC, IrDA, DECT, WLAN, Bluetooth, Wi-Fi, Wi-Fi Direct, GSM, UMTS, LTE, WiBRO, and etc.). The communicator 130 may be an interface device, transceiver, etc. to perform communication using a wired or wireless communication method.

Furthermore, the controller 140 may control the voice recognition apparatus 100 in response to a user command through the communicator 130. For example, in response to a user manipulation command for editing a keyword or domain information stored in the memory 120 through the communicator 130, the controller 140 may update the keyword or the domain information stored in the memory 120 according to the user manipulation command.

The user manipulation command may be received from an external electronic apparatus such as a remote control, a smart phone, and etc. through the communicator 130, or through an input unit (not shown), like a button provided in the voice recognition apparatus 100.

The controller 140 may receive a result of voice recognition from the voice recognition server 200 through the communicator 130, and transmit the received result of voice recognition to an external electronic apparatus. For example, if the external electronic apparatus is an air conditioner, and a result of voice recognition is matched to a control command for turning on the air conditioner, the air conditioner may power on in response to a result of voice recognition received from the voice recognition apparatus 100.

The controller 140 is configured to control an overall operation of the voice recognition apparatus 100.

The controller 140 may control the microphone 110 to generate a voice signal in response to an input of a user's uttered voice.

The controller 140 may recognize a keyword included in the voice signal. In other words, the controller 140 may determine whether a keyword stored in the memory 120 is included in the voice signal and may initiate voice recognition according to the recognition of keyword.

For example, the controller 140, in response to the keyword being recognized from the voice signal, may transmit the voice signal to the voice recognition server 200. In this case, the controller 140 transmits information regarding a domain corresponding to the recognized keyword along with the voice signal to the voice recognition server 200.

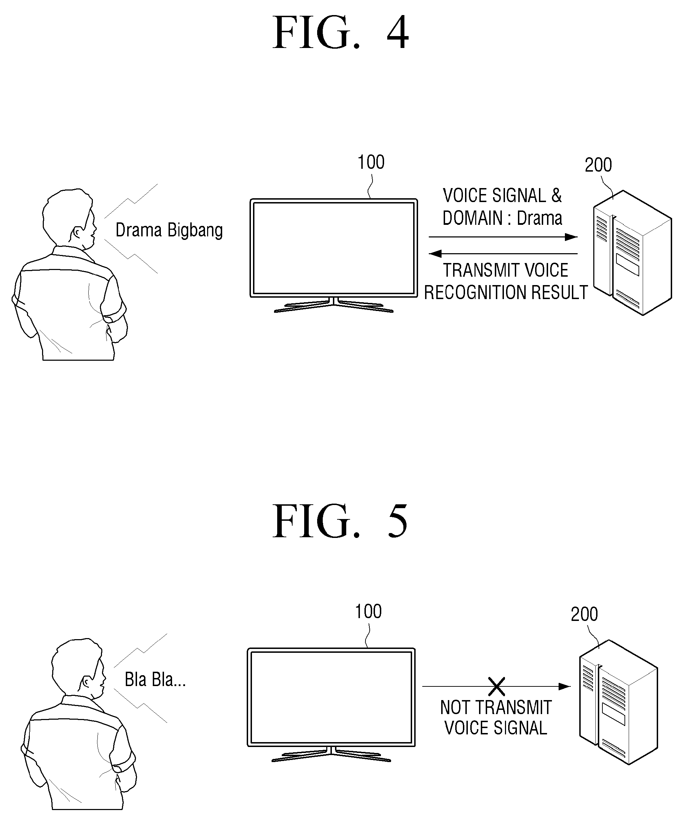

The controller 140, by using domain information corresponding to the keyword stored in the memory 120, may determine a domain corresponding to the recognized keyword, and transmit information regarding the determined domain to the voice recognition server 200. The detailed description will be described with reference to FIG. 4.

FIG. 4 is a view illustrating a voice recognition method of a voice recognition apparatus according to an exemplary embodiment.

In the exemplary embodiment, it may be assumed that information as described in FIG. 3 is stored in the memory 120 of the voice recognition apparatus 100. As illustrated in FIG. 4, in response to an input of a user's uttered voice "Drama Bigbang", the controller 140 may recognize the keyword "Drama" from a voice signal corresponding to the user's uttered voice, determine a "Drama" domain as a domain corresponding to the keyword "Drama" by using domain information stored in the memory 120, and transmit a voice signal to be recognized, that is, "Drama Bigbang" or "Bigbang" without the keyword, along with information regarding the determined "Drama" domain to the voice recognition server 200.

The voice recognition server 200 may perform voice recognition regarding the received voice signal by using an acoustic model and a language model specialized in the Drama domain. Accordingly, the voice recognition server 200 may effectively perform the voice recognition by using the acoustic model and the language model which are appropriate for the given voice signal. Furthermore, the voice recognition server 200 may transmit a result of the voice recognition to the voice recognition apparatus 100.

Meanwhile, in response to a keyword (e.g., a trigger keyword) not being recognized from the voice signal corresponding to the input user's uttered voice, the controller 140 does not process the voice signal.

If a voice signal is not processed, which means that the controller 140 does not transmit the voice signal to the voice recognition server 200 as illustrated in FIG. 5, deleting immediately the voice signal from the voice recognition apparatus 100.

That is, a user's uttered voice not including a keyword is a routine conversation which is not a target for voice recognition, and thus, if the routine conversation is transmitted to an external voice recognition server 200, it may raise privacy violation concerns. Thus, according to the exemplary embodiments, such privacy violations will be prevented. Furthermore, according to an exemplary embodiment of not transmitting a voice signal to the outside of the apparatus, and deleting immediately the voice signal from the voice recognition apparatus 100, such privacy violation concerns may be more certainly prevented.

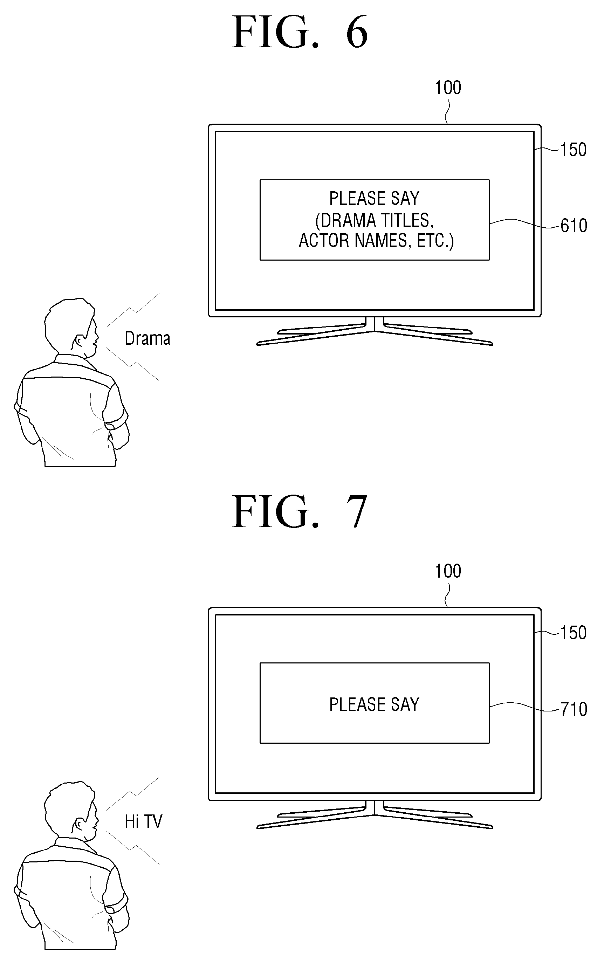

FIG. 6 is a view illustrating a UI screen capable of being displayed on a voice recognition apparatus if an input user's uttered voice includes only a keyword.

As illustrated in FIG. 6, the controller 140, in response to only a keyword "Drama" being included in the input user's uttered voice, may display a UI screen for inducing subsequent utterances.

In this case, the controller 140 may determine a domain corresponding to a keyword recognized by using domain information stored in the memory 120, and display a UI screen 610 for inducing an utterance regarding a topic corresponding to the determined domain. That is, as illustrated in FIG. 6, the UI screen 610 for inducing an utterance such as "drama titles, actor names, and etc." regarding a topic related to a drama domain.

After the UI screen 610 being displayed, the controller 140, in response to an input of a subsequent user's uttered voice through the microphone 110, controls the microphone 110 to generate a voice signal corresponding to the subsequent user's uttered voice, and transmits information regarding the determined domain to the voice recognition apparatus 200. For example, if the subsequent uttered voice is "Bigbang", the controller 140 transmits a voice signal corresponding to the subsequent uttered voice "Bigbang" to the voice recognition server 200. Furthermore, the voice recognition server 200 performs voice recognition for searching for a text having a pattern corresponding to "Bigbang" by using an acoustic model and a language model specialized in a Drama domain, and transmits a result of voice recognition to the voice recognition apparatus 100. Then, for example, a channel broadcasting the drama "Bigbang" may be displayed on the display 150.

FIG. 7 is a view illustrating a UI screen capable of being displayed on a voice recognition apparatus in case that there is no domain corresponding to a keyword included in an input user's uttered voice.

In the memory 120, there may be a keyword having no corresponding domain, and merely initiating a voice recognition mode. For example, as illustrated in FIG. 3, a keyword "Hi TV" has no corresponding domain.

Therefore, the controller 140, in response to an input of a user's uttered voice including the keyword "Hi TV", may determine that there is no domain corresponding to a keyword recognized by using domain information, and as illustrated in FIG. 7, display a UI screen 710 for inducing a subsequent utterance on the display 150. In this case, unlike FIG. 6 in which the UI screen 610 that induces a specific topic is displayed, a UI screen 710 that induces a temporal subsequent utterance simply like "please say" may be displayed on the display 150. The controller 140, in response to an input of the subsequent utterance, may transmit a voice signal corresponding to the subsequent utterance to the voice recognition server 200. In this case, since there is no domain corresponding to "Hi TV", domain information is not transmitted to the voice recognition server 200, or information indicating that corresponding domain does not exist may be transmitted to the voice recognition server 200. The controller 140, in response to a result of voice recognition being received from the voice recognition sever 200, may display the result of voice recognition on the display 150.

Meanwhile, according to an exemplary embodiment, the controller 140, in response to a plurality of keywords being recognized from a voice signal corresponding to an input user's uttered voice, may determine a domain corresponding to each of the plurality of keywords recognized by using domain information stored in the memory 120, and provide the voice recognition server 200 with information regarding the determined domain.

For example, the controller 140, in response to a user's uttered voice "Drama Music winter sonata" being input, may provide the voice recognition server 200 with information regarding a Drama domain corresponding to the keyword "Drama", information regarding a Music domain corresponding to the keyword "Music", and a voice signal corresponding to "winter sonata". The voice recognition server 200 may use the Drama domain and the Music domain in parallel to perform voice recognition regarding the given voice signal "winter sonata". Furthermore, the voice recognition server 200 may transmit a result of the voice recognition regarding a domain showing a higher reliability based on the result of the voice recognition to the voice recognition apparatus 100.

Meanwhile, the user may edit a keyword stored in the memory 120, and edit domain information corresponding to the keyword.

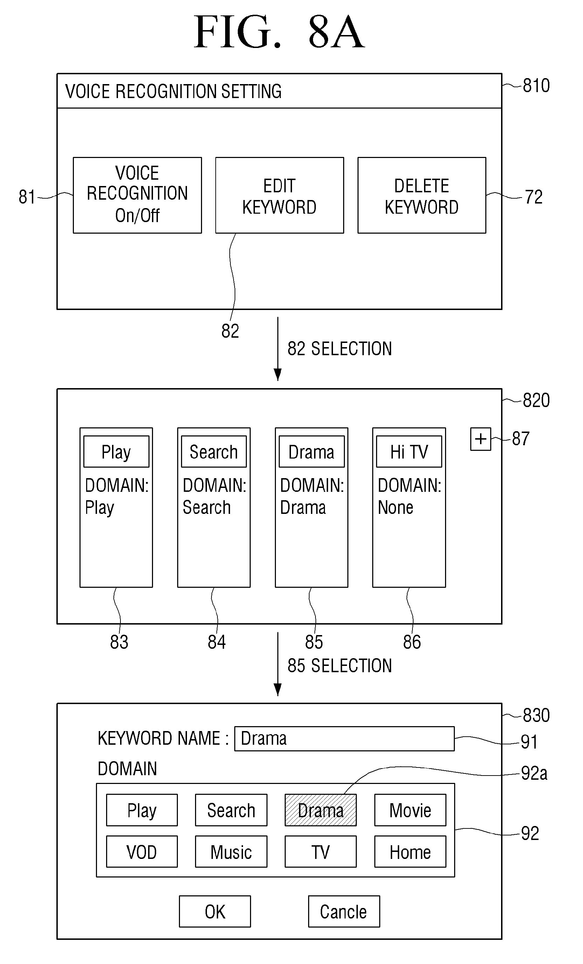

FIGS. 8A to 8D are views illustrating a UI screen for editing a keyword or domain information provided according to various exemplary embodiments. The user may input a manipulation command for editing the keyword or the domain information through the UI screen. For example, a manipulation command may be input through a remote control and a manipulation input unit (not shown) such as a button and etc. provided in the voice recognition apparatus 100. Otherwise, the voice recognition apparatus 100 may communicate with an external electronic apparatus such as a smart phone and etc., and receive a user manipulation command from the external electronic apparatus.

While various UI screens that will be described below may be displayed in the display 150 in the voice recognition apparatus 100, but according to another exemplary embodiment, the voice recognition apparatus 100 may provide the external electronic apparatus with information for generating a UI screen, and various UI screens that will be described below may be displayed on the display of the external electronic apparatus. In this case, the user may input a manipulation command for editing a keyword or domain information of the voice recognition apparatus 100, and the input manipulation command may be transmitted to the voice recognition apparatus 100. Here, it is assumed that the voice recognition apparatus 100 includes a display.

Referring to FIG. 8A, the voice recognition apparatus 100 may display a voice recognition setting UI screen 810. The voice recognition setting UI screen 810 may include various selectable menus related to voice recognition. For example, the voice recognition setting UI screen 810 may include a menu for powering on/off a voice recognition function 81, a menu for editing a keyword 82, and a menu for deleting a keyword 72.

In response to the menu for editing a keyword 82 being selected by a user, as illustrated in FIG. 8A, a keyword management UI screen 820 including keywords stored in the voice recognition apparatus 100 and domain information corresponding to each of the keywords may be displayed. The keyword management UI screen 820 includes icons 83, 84, 85, and 86 which are selectable independently according to each of the keyword, and a name of domain corresponding to each of the keyword is also included therein. Furthermore, the keyword management UI screen 820 may include a new keyword generation menu 87 for adding a new keyword.

In response to a specific icon in the keyword management UI screen 820 being selected, an editing UI screen 830 regarding a keyword corresponding to the icon may be displayed. For example, as illustrated in FIG. 8A, in response to an icon 85 corresponding to the keyword "Drama" being selected, the editing UI screen 830 including a keyword name area 91 capable of editing a name of the Drama keyword and a domain information area 92 indicating a domain corresponding to the Drama keyword may be displayed on the apparatus. For example, information regarding a domain corresponding to the Drama keyword may be displayed in the way that a drama domain 92a corresponding to the Drama keyword has a different design from other domains.

The user may edit a name of the keyword. That is, the controller 140, in response to a user manipulation command for editing domain information corresponding to at least one of keywords among a plurality of keywords stored in the memory 120 being received, may update domain information corresponding to at least one of the keyword among the plurality of keywords stored in the memory 120 based on the received user manipulation command.

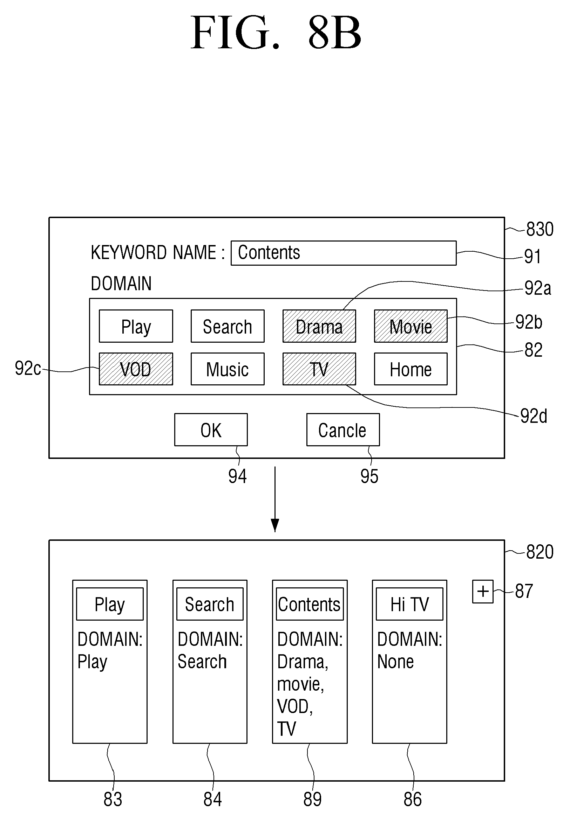

For example, as illustrated in FIG. 8A, the user may delete the keyword "Drama" from the keyword name area 91, and input "Contents" which is a new name of the keyword. Furthermore, the user may also edit the domain information. For example, if only one Drama domain 92a was selected previously, as illustrated in FIG. 8B, the user may select Movie domain 92b, a VOD domain 92c, and a TV domain 92d which are new domains corresponding to the keyword "Contents". Furthermore, in response to an OK button 94 being selected, the keyword "Contents" instead of "Drama" is registered in the keyword management UI screen 820, a corresponding icon 89 is generated, and names of domains corresponding to the keyword "Contents" such as Drama, Movie, VOD and TV may be displayed on the screen. The controller 140, in response to the keyword "Contents" being included in the user's uttered voice which is input later, may transmit information regarding the domains of Drama, Movie, VOD, TV, and a voice signal to the voice recognition server 200.

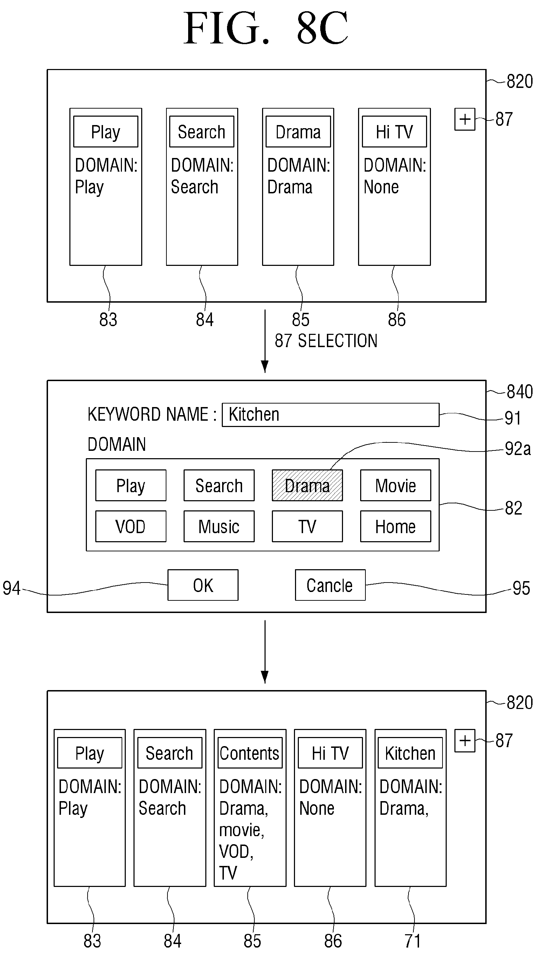

Furthermore, the user may register a new keyword. For example, as illustrated in FIG. 8C, in response to a new keyword generation icon 87 in the keyword management UI screen 820 being selected, an editing UI screen 840 for registering a new keyword is displayed on the screen. In response to an input of a keyword that the user wishes to generate on the keyword name area 91 such as "Kitchen", a selection of the Dram domain 92a as a domain corresponding to the keyword "Kitchen", and a press of the OK button 94, an icon 71 corresponding to a new keyword "Kitchen" is generated and displayed on the keyword management UI screen 820, and a name of domain "Drama" corresponding to the keyword "Kitchen" may be displayed on the screen. The controller 140 may store a new keyword and domain information corresponding to the new keyword in the memory 120, and the controller 140, in response to the keyword "Kitchen" being included in a user's uttered voice which is input later, may transmit information regarding the Drama domain and a voice signal to the voice recognition server 200.

In response to a cancel button 95 in the editing UI screen 840 being selected, the current screen may be return to the previous screen.

Furthermore, the user may delete a keyword. For example, in response to a menu for deleting keyword 72 in the voice recognition setting UI screen 810 being selected, a UI screen for deleting keyword 850 is displayed on the screen. The UI screen for deleting keyword 850 includes all keywords stored in the memory 120. If the user selects an icon 73b corresponding to a keyword "Search" and an icon 73c corresponding to a keyword "Drama", and selects a delete button 75 to delete the keywords "Search" and "Drama" from the screen, keywords corresponding to the selected icons are deleted from the screen, and a UI screen 860 including information regarding the remaining keywords 73a and 73d may be displayed on the screen. The screen, in response to the cancel button 76 being selected, may be returned to the previous screen.

According to the above-described exemplary embodiments, the user may edit keywords for initiating voice recognition, and edit domain information corresponding to each of the keywords, and thus, there is an effect of increasing the user satisfaction of voice recognition results.

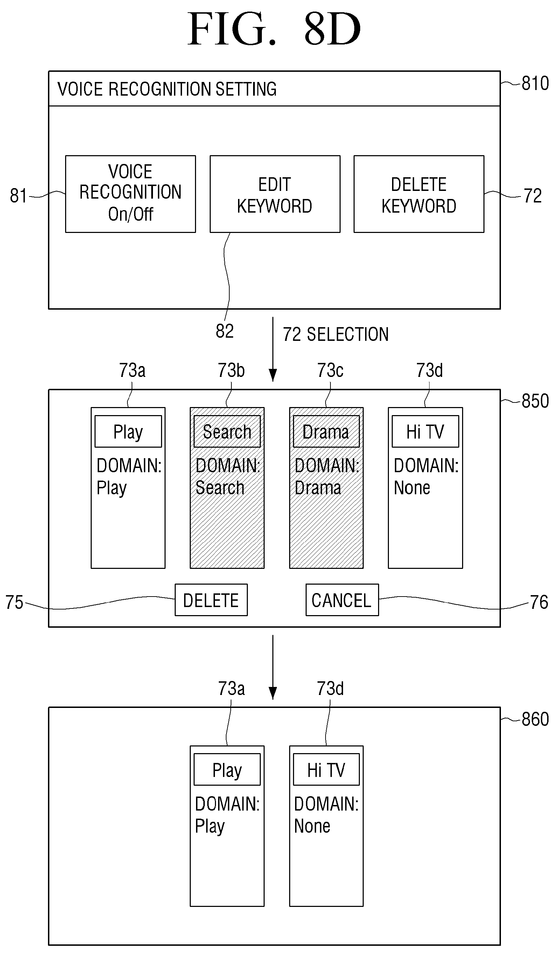

Meanwhile, the user manipulation command for editing may be received from an external apparatus. For example, the controller 140 may transmit keywords stored in the memory 120 and domain information corresponding to each of the keywords to the external apparatus. Then, the external apparatus displays an UI screen as illustrated in FIGS. 8A and 8D, receives an input of a user manipulation command for editing a keyword and/or domain information, transmits the input user manipulation command to the voice recognition apparatus 100, and the controller 140 may update the keyword and/or the domain information stored in the memory 120 according to the received manipulation command.

The user manipulation command may have various forms such as a manipulation command for selecting a menu displayed on the UI screen, a manipulation command for inputting texts, and etc., and may have a form of a manipulation command for using a voice to input texts, and thus, a form of the user manipulation command is not limited thereto.

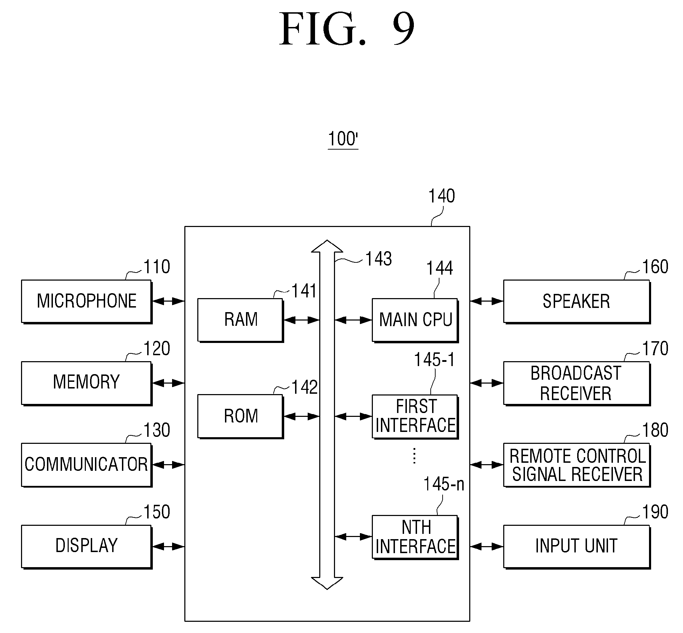

FIG. 9 is a block diagram illustrating a voice recognition apparatus that is implemented as a TV according to an exemplary embodiment.

Referring to FIG. 9, a voice recognition apparatus 100' may include the microphone 110, the memory 120, the communicator 130, the controller 140, the display 150, a speaker 160, a broadcast receiver 170, a remote control signal receiver 180, and an input unit 190.

The microphone 110 is configured to receive an input of a user's uttered voice, and generate a voice signal. If the microphone 110 is a general microphone, it is not limited thereto.

The memory 120 may store various data such as O/S, programs like each type of applications, user setting data, data generated in a process of performing the applications, multimedia contents, and so on.

The memory 120 may store various information, such as keywords for initiating voice recognition, domain information corresponding to each of the keywords, information regarding the voice recognition server 200, a command matched to a recognized voice, and etc.

The communicator 130 may communicate with various external sources, for example, with the voice recognition server 200, according to various communication protocols. For example, the communicator 130 may use various communication methods such as EEE, Wi-Fi, Bluetooth, 3G (3rd Generation), 4G (4th Generation), Near Field Communication (NFC), and etc. Specifically, the communicator 130 may include various communication chips such as a Wi-Fi chip, a Bluetooth chip, a NFC chip, a wireless communication chip, and so on. Those communication chips such as Wi-Fi chip, Bluetooth chip, NFC chip, and wireless communication chip perform communication by using a Wi-Fi method, a Bluetooth method, and a NFC method, respectively. From among these chips, the NFC chip refers a chip which is operated by using the method of NFC using 13.56 MHz bands from various RF-ID frequency range, such as 135 kHz, 13.56 MHz, 433 MHz, 860-960 MHz, 2.45 GHz, and so on. If the Wi-Fi chip or the Bluetooth chip is used, each type of connection information such as a subsystem identification (SSID), a session key, and etc. may be transmitted to and received from the various external sources, and then, communication may be connected by using the information, followed by transmitting and receiving each type of the information. The wireless communication chip refers a chip for performing communication according to various communication standards such as IEEE, Zigbee, 3G, 3GPP (3rd Generation Partnership Project), LTE (Long Term Evoloution) and so on.

The controller 140 controls an overall operation of the voice recognition apparatus 100'. The controller 140, in response to a user's uttered voice being input through the microphone 110, and a voice signal being generated, determines whether to transmit the voice signal to the voice recognition server 200 according to a presence of a keyword in the voice signal.

The controller 140 may include RAM (141), ROM (142), main CPU (144), each type of interfaces (145-1 ~ 145-n), and bus (143).

There are connections between RAM (141), ROM (142), main CPU (144), and each type of interfaces (145-1 ~ 145-n), enabling a transmission and a reception of each type of data or signal.

First to Nth interfaces (145-1 ~ 145-n) are connected not only to each type of components as illustrated in FIG. 9, but also to other components, so that the main CPU 144 may access each type of the data or the signal. For example, the main CPU 144, in response to an external device such as a USB memory being connected to the First to Nth interfaces (145-1 ~ 145-n), may access the USB memory through a USB interface.

The main CPU 144, in response to the voice recognition apparatus 100' being connected to an external power, is operated in a state of standby. If a turn-on command is input through each type of input means such as the remote control signal receiver 180, the input unit 190, or etc. in the state of standby, the main CPU 144 access the memory 120, and performs booting by using O/S stored in the memory 120. Furthermore, the main CPU 144 performs setting of each function of the voice recognition apparatus 100' according user setting information pre-stored in the memory 120.

ROM 142 stores a set of commands for booting system. In response to a turn-on command being input, and the power being supplied, the main CPU 144 copies O/S stored in the memory 120 to the RAM 142, and executes O/S to boot the system according to a command stored in the ROM 142. In response to the booting being completed, the main CPU 144 copies each type of programs stored in the memory 120 to the RAM 141, and executes a program copied to the RAM 141 to perform each type of operations.

The display 150 is configured to display various screens including a menu regarding a function or other messages provided by the voice recognition apparatus 100' on the display 150. The display 150 may display a UI screen for confirming or editing a keyword stored in the memory 120 and domain information corresponding to the keyword on the display 150.

The display 150, for example, may be implemented as a Liquid Crystal Display (LCD), a cathode-ray tube (CRT), a plasma display panel (PDP), an organic light emitting diodes (OLED), a transparent OLED (TOLED), and etc. Furthermore, the display 150 may be implemented as a form of a touch screen capable of sensing a touch manipulation of the user.

The speaker 160 is a component for outputting not only each type of audio data processed in an audio processor (not shown), but also each type of alarm, voice message, or etc. In particular, the speaker 160 may output a system response corresponding to a recognized uttered voice. The speaker 160 may be implemented not only as a form of a speaker for outputting the system response in a form of voice, but also as an outputting port such as a jack for connecting an external speaker to output the system response in a form of voice through the external speaker.

The broadcast receiver 170 is a component for tuning a broadcast channel, receiving a broadcast signal, and processing the received broadcast signal. The broadcast receiver 170 may include a tuner, a demodulator, an equalizer, a demultiplexer, and so on. The broadcast receiver 170 tune a broadcast channel according to a control of the controller 140, receives a user desired broadcast signal, demodulates and equalizes the received broadcast signal, and then, demuxes into video data, audio data, additional data, and etc.

The demuxed video data is transmitted to an image processor (not shown). The image processor performs various image processes such as noise filtering, frame rate conversion, resolution conversion, and etc. regarding the transmitted video data, and generates a frame to be output on a screen.

The demuxed audio data is transmitted to an audio processor (not shown). In the audio processor, various processing such as decoding or amplification of audio data, noise filtering, and etc. may be performed.

The remote control signal receiver 180 is configured to receive a remote control signal transmitted from a remote control. The remote control signal receiver 180 may be implemented as a form including a light receiving portion for receiving an input of an Infra Red (IR) signal, and may be implemented as a form of receiving a remote control signal by performing communication according to a wireless communication protocol such as a remote control, Bluetooth, or Wi-Fi. In particular, the remote control signal receiver 180 may receive a user manipulation command for editing a keyword stored in the memory 120 and/or domain information corresponding to the keyword.

An input unit 190 may be implemented as each type of button provided in the voice recognition apparatus 100'. The user may input various user commands such as a turn on/off command, a channel conversion command, a sound control command, a menu confirm command, and etc. through the input unit 190. Furthermore, the user may input a manipulation command for editing a keyword stored in the memory 120 and/or domain information corresponding to the keyword through the input unit 190.

If the voice recognition apparatus 100' is implemented as a multi- functional terminal apparatus such as a mobile phone, a tablet PC, or etc., it is certain that the voice recognition apparatus 100' may further include various components such as a camera, a touch sensor, a geo-magnetic sensor, a gyroscope sensor, an acceleration sensor, a GPS chip, and so on.

The above-described various exemplary embodiments may be implemented in a recording medium readable by a computer or an apparatus similar to the computer by using software, hardware, or combined thereof. According to a hardware implementation, the exemplary embodiments may be implemented by using at least one of electronic units for performing Application Specific Integrated Circuits (ASICs), digital signal processors (DSPs), digital signal processing devices (DSPDs), programmable logic devices (PLDs), field programmable gate arrays (FPGAs), processors, controllers, micro-controllers, microprocessors, and other functions. In some cases, the exemplary embodiments may be implemented by using the controller 140. According to a software implementation, the exemplary embodiments such as the procedure and the function described herein may be implemented as separate software modules. Each of the software module described herein may perform one or more functions and operations.

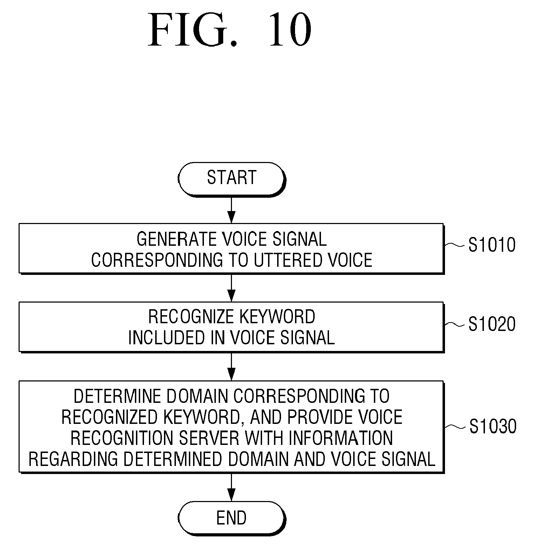

FIG. 10 is a flowchart illustrating a control method of a voice recognition apparatus for storing domain information corresponding to a plurality of keywords and each of the plurality of keywords according to an exemplary embodiment.

Referring to FIG. 10, a voice signal corresponding to an uttered voice is generated (operation S1010).

Next, a keyword included in the voice signal is recognized (operation S1020). Here, in response to a trigger keyword for initiating voice recognition being recognized, a voice recognition mode is initiated. For example, in response to the voice recognition mode being initiated, a domain corresponding to the recognized keyword is determined by using pre-stored domain information, and information regarding the determined domain and the voice signal are transmitted to an external voice recognition server (operation S1030).

Meanwhile, in response to a plurality of keywords being recognized in the voice signal, the voice recognition apparatus may determine a domain corresponding to each of the plurality of keywords recognized by using domain information, and provide the external voice recognition server with information regarding the determined domain.

In response to a voice signal not being recognized, the voice recognition apparatus does not perform any process regarding the voice signal. That is, if a keyword is not recognized, which means that voice recognition is against a user's intention, and thus, there is no need to transmit the voice signal to the external voice recognition server. Accordingly, this method may prevent a user's routine conversation against the user's intention from being leaked outside of the apparatus.

As described above, a first recognition operation for recognizing a keyword initiating the voice recognition is performed by the voice recognition apparatus, and in response to the keyword being recognized, the voice recognition apparatus transmits the voice signal to the external voice recognition server so that a second voice recognition is performed. By using this method, it is possible to perform an accurate voice recognition through the external voice recognition server capable of processing a large amount of information, while obtaining an effect of preventing the user's routine conversation from being leaked outside of the apparatus.

Then, in response to a result of the voice recognition being received from the external voice recognition server, the voice recognition apparatus may transmit the received result of voice recognition to an external electronic apparatus. In this case, the external electronic apparatus is an electronic apparatus to be controlled by using the voice recognition.

Otherwise, in response to the result of the voice recognition being received from the external voice recognition server, the received result of the voice recognition may be displayed on a display in the voice recognition apparatus. For example, if a voice saying that "how is the weather today?" is input, the result of the voice recognition is received from the voice recognition server, and the voice recognition apparatus may display a text "Please say your desired location" on the display.

Furthermore, a keyword stored in the voice recognition apparatus and domain information corresponding to the keyword may be edited. To achieve this, the voice recognition apparatus may display a UI screen including the pre-stored keyword and the domain information corresponding to the keyword on the display. The user may input a manipulation command for editing the keyword or the domain information through the displayed UI screen.

The voice recognition apparatus may receive a user manipulation command for editing domain information corresponding to at least one of keywords among pre-stored plurality of keywords. Furthermore, based on the received user manipulation command, it is possible to update domain information corresponding to at least one of the keywords among the pre-stored plurality of keywords.

In this case, the user manipulation command may be received from an external apparatus. To receive the command from the external apparatus, the voice recognition apparatus may transmit the domain information corresponding to the pre-stored plurality of keywords and each of the plurality of keywords to the external apparatus, and the voice recognition apparatus, in response to the user manipulation command being received from the external apparatus, may update the domain information corresponding to at least one of the keywords among the pre-stored plurality of keywords.

Meanwhile, the methods according to the above-described various exemplary embodiments may be performed by using software which may be mounted on an electronic apparatus.

While not restricted thereto, an exemplary embodiment can be embodied as computer-readable code on a non-transitory computer readable medium storing a program for performing steps of generating a voice signal corresponding to an uttered voice, recognizing a keyword included in the voice signal, determining a domain corresponding to the recognized keyword by using pre-stored domain information, providing an external voice recognition server with information regarding the determined domain and the voice signal.

The non-transitory recordable medium refers to a medium which may store data semi-permanently rather than storing data for a short time, such as register, cache, memory, etc. and is readable by an apparatus. Specifically, the above-described various applications and programs may be stored and provided in a non-transitory recordable medium such as CD, DVD, hard disk, Blu-ray disk, USB, memory card, ROM, etc. The non-transitory readable medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses and devices can include circuitry, a processor, a microprocessor, etc., and may execute a computer program stored in a computer-readable medium.

The foregoing exemplary embodiments and advantages are merely exemplary and are not to be construed as limiting the present disclosure. Also, the description of the exemplary embodiments is intended to be illustrative, and not to limit the scope of the claims, and many alternatives, modifications, and variations will be apparent to those skilled in the art.

## Claims

1. A voice recognition apparatus, comprising:
a communicator configured to communicate with an external voice recognition server;
a memory configured to store a plurality of keywords and domain information corresponding to each of the plurality of keywords;
a microphone configured to generate a voice signal corresponding to an uttered voice; and
a controller configured to recognize a keyword included in the voice signal, determine a domain corresponding to the recognized keyword by using the domain information, and control the communicator to transmit information regarding the determined domain and the voice signal to the external voice recognition server.

2. The apparatus as claimed in claim 1, wherein in response to a keyword not being recognized from the voice signal, the controller does not process the voice signal.

3. The apparatus as claimed in claim 1 or 2, wherein the controller is configured to recognize a plurality of keywords included in the voice signal, determine a domain corresponding to each of the plurality of recognized keywords by using the domain information, and transmit information regarding the determined domain to the external voice recognition server.

4. The apparatus as claimed in any one of claims 1 to 3, wherein the controller is configured to receive a result of voice recognition from the external voice recognition server, and transmit the received result of voice recognition to an external electronic apparatus.

5. The apparatus as claimed in any one of claims 1 to 4, further comprising;
a display configured to, in response to receiving a result of voice recognition from the external voice recognition server, display the received result of voice recognition.

6. The apparatus as claimed in claim 5, wherein a plurality of keywords stored in the memory include a trigger keyword for initiating voice recognition,
wherein the controller is configured to control the display to display a UI screen for inducing a subsequent utterance if only the trigger keyword is included in the voice signal, in response to an input of the subsequent utterance, determine a domain corresponding to the trigger keyword included in a voice signal corresponding to the subsequent utterance by using the domain information, and transmit information regarding the determined domain and the voice signal corresponding to the subsequent utterance to the external voice recognition server.

7. The apparatus as claimed in claim 6, wherein the UI screen for inducing a subsequent utterance includes a screen for inducing an utterance regarding a topic corresponding to the determined domain.

8. The apparatus as claimed in claim 5, wherein the controller is configured to control the display to display a UI screen including a plurality of keywords stored in the memory and domain information corresponding to each of the plurality of keywords.

9. The apparatus as claimed in any one of claims 1 to 8, wherein, the controller is configured to, in response to receiving a user manipulation command to register a new keyword and domain information corresponding to the new keyword, store the new keyword and the domain information corresponding to the new keyword in the memory.

10. The apparatus as claimed in any one of claims 1 to 9, wherein the controller is configured to, in response to receiving a user manipulation command to edit domain information corresponding to at least one of a plurality of keywords stored in the memory, update the domain information corresponding to the at least one of the plurality of keywords stored in the memory based on the received user manipulation command.

11. The apparatus as claimed in claim 10, wherein the controller is configured to transmit the plurality of keywords stored in the memory and the domain information corresponding to each of the plurality of keywords to an external apparatus, and control the communicator to receive the user manipulation command from the external apparatus.

12. A control method of the voice recognition apparatus storing a plurality of keywords and domain information corresponding to each of the plurality of keywords, comprising:
generating a voice signal corresponding to an uttered voice;
recognizing a keyword included in the voice signal; and
determining a domain corresponding to the recognized keyword by using the domain information, and transmitting information regarding the determined domain and the voice signal to an external voice recognition server.

13. The method as claimed in claim 12, wherein the recognizing the keyword comprises, in response to a keyword not being recognized from the voice signal, not processing the voice signal.

14. The method as claimed in claim 12 or 13, wherein the recognizing the keyword comprises recognizing a plurality of keywords included in the voice signal, and the transmitting comprises determining a domain corresponding to each of the plurality of recognized keywords by using the domain information, and transmitting information regarding the determined domain to the external voice recognition server.

15. The method as claimed in any one of claims 12 to 14, further comprising receiving a result of voice recognition from the external voice recognition server, and transmitting the received result of voice recognition to an external electronic apparatus.
